# EUROPÄISCHE PATENTSCHRIFT

(11) **EP 1 531 323 B1**
(45) Veröffentlichungstag und Bekanntmachung des Hinweises auf die Patenterteilung: **02.06.2010**
(21) Anmeldenummer: 04025600.0
(22) Anmeldetag: 28.10.2004
(51) Int. Cl.: G01L 19/14

(54) **Befestigung für einen Drucksensor**
Mounting of pressure sensor
Fixation d'un capteur de pression

(30) Priorität: 14.11.2003 DE 10353323
(43) Veröffentlichungstag der Anmeldung: 18.05.2005
(73) Patentinhaber: VEGA Grieshaber KG, 77709 Wolfach (DE)
(72) Erfinder: Kopp, Thomas, 77709 Wolfach (DE)
(74) Vertreter: Patentanwälte Westphal, Mussgnug & Partner

(56) Entgegenhaltungen:
- EP-A- 0 303 979
- EP-A- 0 838 666
- EP-A- 1 089 063
- EP-A- 1 471 341
- EP-A- 1 484 590
- DE-A1- 4 234 290
- DE-C1- 4 407 212
- US-A- 6 029 523

## Beschreibung

Die Erfindung bezieht sich auf einen Sensor, insbesondere Druck-Sensor mit einer Sensoreinrichtungs-Befestigungseinrichtung zum Befestigen einer Sensoreinrichtung im vorderseitigen Bereich eines Gehäuses gemäß den oberbegrifflichen Merkmalen des Patentanspruchs 1 bzw. auf ein Verfahren zum Montieren eines Druck-Sensors mit den oberbegrifflichen Merkmalen des Patentanspruchs 12.

Allgemein bekannt sind Druckmesseinrichtungen mit einem Gehäuse, mit einer Sensoreinrichtung, mit einer Sensoreinrichtungs-Befestigungseinrichtung zum Befestigen der Sensoreinrichtung am oder im vorderseitigen Bereich des Gehäuses und mit einer Dichtung zum Abdichten des Übergangs zwischen dem Gehäuse und der Sensoreinrichtung. Derartige Sensoren werden beispielsweise in einer Wandung von einem Behältnis eingebaut, um Parameter bezüglich des Behältnisinhalts oder Behältnisinnenraums zu bestimmen. Die Gehäuse werden dazu mit ihrem vorderseitigen Ende, in dem die Sensoreinrichtung zur Vorderseite hin offen befestigt ist, in einer Durchgangsöffnung in der Wandung des Behältnisses eingesetzt. Die Befestigung des Gehäuses an der Wandung des Behältnisses erfolgt vorzugsweise durch Schraubverbindungen oder mittels eines Einschweißflansches.

Bekannt sind Sensoren bzw. Druckmesseinrichtungen mit einem keramisch kapazitiven Druck-Sensorelement, welche aus einem Grundkörper und einer ebenen Membrane bestehen. Der Grundkörper ist rückseitig, d. h. zum Prozessanschluss hin eingebaut und damit gegen die Druckwirkung durch das zu überwachende Medium im Behältnis abgestützt. Der Grundkörper dient zur Befestigung des eigentlichen Drucksensorelements im Anschluss und zur Befestigung einer Membrane, die sich mit dem zu messenden Druck um einen Weg entsprechend diesem Druck durchbiegt. Die Durchbiegung führt an zwei Elektroden zwischen Membrane und Grundkörper zu einer Kapazitätsänderung, welche über elektrische Leitungen und eine Auswertelektronik zu einem Stromsignal oder Digitalwert verarbeitet wird. Der Außendurchmesser solcher kapazitiver Drucksensorelemente wird derzeit nicht kleiner als 17,5 mm des Gehäuseanschluss-Außendurchmessers im Durchmesser realisiert, da für die Messung von kleineren hydrostatischen Drücken eine sehr dünne Membrane verwendet werden muss, was für eine Serienfertigung fertigungstechnisch aufwendig und dadurch unwirtschaftlich ist.

Außerdem sind Sensoren als Polysilizium-Druck-Sensoren bekannt, welche in Verbindung mit einer Druckmittlerlüssigkeit eingesetzt werden.

Bekannt sind dabei Druckmesseinrichtungen mit z. B. einem Gewindeanschluss G 1,5 und frontbündiger Druck-Sensoreinrichtung, wobei die Druck-Sensoreinrichtung ohne einen Rücksatz zu deren Befestigung eingebaut ist. Technisch möglich sind minimale Rücksätze, vorzugsweise bis zu 0,04 mm. Die Frontbündigkeit ist besonders wichtig bei Messungen in Medien bei welchen sich durch einen großen Rücksatz Ablagerungen bilden können, welche zu Verkrustungen oder zur Anlagerung von Verunreinigungen bei der Produktion von Lebensmitteln führen können, welche letztendlich die Haltbarkeit der Lebensmittel reduzieren.

Der Gehäuseumfang im Bereich des vorderseitigen Endes eines Druck-Sensors, welcher einer entsprechenden Öffnung in der Wandung des Behältnisses entspricht, in dem der Druck zu bestimmen ist, ist je nach Art des Druck-Sensors verschieden. Bekannt sind Druck-Sensoren mit einer frontbündigen keramisch kapazitiven Sensoreinrichtung, deren Umfang ein Sensor-Durchmesser von 28 mm aufweist. Bekannte Sensoren sind in EP 1 089 063, DE 4 407 212, US 6 029 523, EP 0 303 979 offenbart.

Die Aufgabe der Erfindung besteht darin, einen Druck-Sensor mit einem Gehäuse und einer darin vorderseitig eingesetzten Sensoreinrichtung vorzuschlagen, welche eine Verringerung des Gesamtdurchmessers bzw. eine Vergrößerung des Durchmessers der Sensoreinrichtung relativ zum Außendurchmesser des Gehäuses ermöglichen.

Diese Aufgabe wird durch einen Druck-Sensor mit den Merkmalen des Patentanspruchs 1 gelöst.

Bevorzugt wird ein Druck-Sensor mit einem Gehäuse, einer Sensoreinrichtung, einer Sensoreinrichtungs-Befestigungseinrichtung zum Befestigern der Sensoreinrichtung an und/oder im vorderseitigen Bereich des Gehäuses und einer Dichtung zum Abdichten des Übergangs zwischen dem Gehäuse und der Sensoreinrichtung, wobei das Gehäuse eine innenseitige Gehäusewandung aufweist und die Sensoreinrichtung eine außenseitige Sensoreinrichtungswandung aufweist, wobei die Gehäusewandung und die Sensoreinrichtungswandung zueinander benachbart verlaufen und einen Aufnahmeraum zum Aufnehmen der Dichtung aufweisen, insbesondere ausbilden. Die Sensoreinrichtungs-Befestigungseinrichtung weist den Aufnahmeraum und die Dichtung auf. Die Dichtung ist zwischen der Gehäusewandung und der Sensoreinrichtungswandung derart eingespannt, dass die Dichtung eine wirkende Kraft in Richtung der Gehäusewandung und der Sensoreinrichtungswandung aufbaut und diese gegeneinander verspannt. Dies wird erreicht durch einen Drucksensor, bei dem eine Erstreckung des Aufnahmeraums für die Dichtung in seitlicher Richtung zwischen Gehäusewandung und Sensoreinrichtungswandung kleiner der entsprechende Erstreckung der nicht eingespannten Dichtung ist. Die entspannte Dichtung ist somit breiter als der Aufnahmeraum und wird beim Einsetzen in den Aufnahmeraum zusammengedrückt. Dies verursacht innerhalb der Dichtung die gegen die benachbarten Wandungen wirkende Kraft. Insbesondere wird ein Drucksensor, bei dem als Anschlag für die Dichtung in vorderseitiger Richtung das Gehäuse einen vorderseitigen und nach innen gerichteten Dichtungsbegrenzungs-Vorsprung zur Sensoreinrichtungswandung hin aufweist und/oder die Sensoreinrichtung einen vorderseitigen Dichtungsbegrenzungsvorsprung zur Gehäusewandung hin aufweist, vorgeschlagen.

Durch das die Dichtung verformende Einspannen der Dichtung versucht die Dichtung somit sich in seitlicher Richtung auszudehnen. Insbesondere bei einer zylindrischen Anordnung und dem Einsatz eines O-Rings als Dichtung, verbleibt der Dichtung dabei effektiv nur die Möglichkeit zur Ausdehnung in Richtung der Gehäusewandung sowie der dazu gegenüberliegenden Sensoreinrichtungswandung. Diese Wandungen werden durch die auf diese wirkende seitliche Kraft auseinander gedrückt. Da die Sensoreinrichtung innerhalb des Gehäuses eingesetzt ist, kann diese jedoch nicht von der Gehäusewandung wegbewegt werden. Dadurch wird die Sensoreinrichtung letztendlich innerhalb des Gehäuses bzw. innerhalb der vorzugsweise zylindrischen Gehäusewandung durch die seitlich in der eingespannten Dichtung wirkenden Kräfte festgespannt. Natürlich kann die Sensoreinrichtung prinzipiell auch ein Stück aus dem Gehäuse vorderseitig herausragen, so dass sie dann am vorderseitigen Bereich, d. h. nur teilweise im vorderseitigen Bereich des Gehäuses angeordnet ist.

Unter einem Einspannen der Dichtung ist auch ein Einspannen mit nicht senkrecht in Richtung der Wandungen sondern auch unter Winkeln schräg zu den Wandungen wirkenden Kräften zu verstehen. Je senkrechter die Einspannkraft der Dichtung relativ zu den Wandungen wirkt, desto besser ist die Verspannung von Sensoreinrichtung und Gehäuse gegeneinander.

Vorteilhafte Ausgestaltungen sind Gegenstand von abhängigen Ansprüchen.

Bevorzugt wird ein Drucksensor, bei dem in rückseitiger Richtung der Dichtung, die zwischen der Gehäusewandung und der Sensoreinrichtungswandung eingespannt ist, ein freier Raum zu rückseitig benachbarten Gehäusekomponenten verbleibt. Dies dient dazu, ein Zerquetschen der Dichtung durch übermäßige achsial auf die Dichtung wirkende Spannkräfte zu vermeiden.

Bevorzugt wird ein Drucksensor, bei dem die Sensoreinrichtungs-Befestigungseinrichtung eine Verstelleinrichtung mit einem Aufnahmeraum-Begrenzungsabschnitt aufweist, der zumindest teilweise zwischen der Gehäusewandung und der Sensoreinrichtungswandung in Richtung der Dichtung verstellbar angeordnet ist.

Bevorzugt wird ein Drucksensor, bei dem die Verstelleinrichtung ein Außengewinde zum Einschrauben in ein Innengewinde des Gehäuses, insbesondere der Gehäusewandung aufweist, wobei das Außengewinde und das Innengewinde so ineinander eingreifen, dass der Aufnahmeraum-Begrenzungsabschnitt der Verstelleinrichtung in Richtung der Dichtung verstellbar ist, insbesondere als ein Spannabschnitt gegen die Dichtung spannbar ist. Mit dem Spannabschnitt kann die Dichtung in einer Richtung ungleich zu der Sensoreinrichtungswandung hin gespannt und zusammengedrückt werden, so dass die Dichtung sich in Richtung der Sensoreinrichtungswandung und in Richtung der Gehäusewandung ausdehnt und eine die Sensoreinrichtung und das Gehäuse zueinander verspannende Druckkraft ausübt. Vorteilhafterweise wird somit ausgenutzt, dass die Dichtung in üblicher Art und Weise eine elastische Eigenschaft aufweist und beim Zusammendrücken durch eine außen anliegende Kraft in einer Richtung verformt wird. Die Verformung bewirkt eine Ausdehnung der Dichtung in der zur wirkenden Kraft seitlichen Richtung. Die achsial auf die Dichtung wirkende Spannkraft wird somit seitlich auf die gegenüberliegenden Wandungen, d. h. die Gehäusewandung und die Sensoreinrichtungswandung umgeleitet. Diese Ausgestaltung ist somit alternativ oder zusätzlich zu dem Einsetzen der Dichtung in einen Aufnahmeraum, der schmaler als die entspannte Dichtung ist, umsetzbar.

Bevorzugt wird ein Drucksensor, bei dem die Verstelleinrichtung einen mit dem Gehäuse gekoppelten innenseitigen Anschlag zum Anlegen an einen rückseitigen Abschnitt der Sensoreinrichtung aufweist, um eine Einschubtiefe der Sensoreinrichtung (4) in das Gehäuse (2) zu begrenzen.

Bevorzugt wird ein Drucksensor, bei dem die Verstelleinrichtung einen außenseitigen Anschlag zum Anlegen an einen innenseitigen Befestigungseinrichtungs-Begrenzungsvorsprung des Gehäuses aufweist, um den Vorschub der Verstelleinrichtung in vorderseitiger Richtung zu begrenzen.

Bevorzugt wird ein Drucksensor, bei dem die Sensoreinrichtung ein keramisch kapazitives Drucksensorelement mit einem Außendurchmesser kleiner oder gleich 18 mm aufweist.

Bevorzugt wird ein Drucksensor, bei dem das Gehäuse einen Außendurchmesser von 20 - 25 mm, insbesondere 22 mm aufweist.

Bevorzugt wird ein Drucksensor, bei dem der Aufnahmeraum für die Dichtung in achsialer Richtung höher, insbesondere 1,5-fach höher als die achsiale Erstreckung der Dichtung ausgebildet ist, ein innenseitiger Anschlag der Sensoreinrichtungs-Befestigungseinrichtung gegenüber einem vorderseitigen Spannabschnitt zum Spannen der Dichtung in achsialer Richtung um eine Erstreckung größer der entsprechenden Dimension der Dichtung, insbesondere größer 2 mm oder mehr, beabstandet sind und eine achsiale Erstreckung vom innenseitigen Anschlag zum vorderseitigen Spannabschnitt der Sensoreinrichtungs-Befestigungseinrichtung plus der achsialen Erstreckung des Dichtungsaufnahmeraums für die Dichtung plus eine Erstreckung eines Dichtungsbegrenzungs-Vorsprungs zusammengesetzt gleich der achsialen Erstreckung der Sensoreinrichtung ist.

Ein Ausführungsbeispiel der Erfindung sowie Modifikationen werden nachfolgend anhand der Zeichnung näher erläutert. Es zeigen:
- Fig. 1: eine Teilschnittansicht durch einen frontseitigen Abschnitt eines Druck-Sensors;
- Fig. 2: einen frontseitigen Abschnitt eines Druck-Sensors gemäß einer modifizierten Ausführungsform;
- Fig. 3: eine Schnittdarstellung durch einen Druck-Sensor gemäß einer weiteren Modifikation, wobei der Druck-Sensor in einem Behältnis eingebaut dargestellt ist;
- Fig. 4A: einen vergrößerten frontseitigen Abschnitt des Druck-Sensors gemäß Fig. 3; sowie
- Fig. 4B: eine Schnittdarstellung durch eine vergrößerte Druck-Sensoreinrichtung.

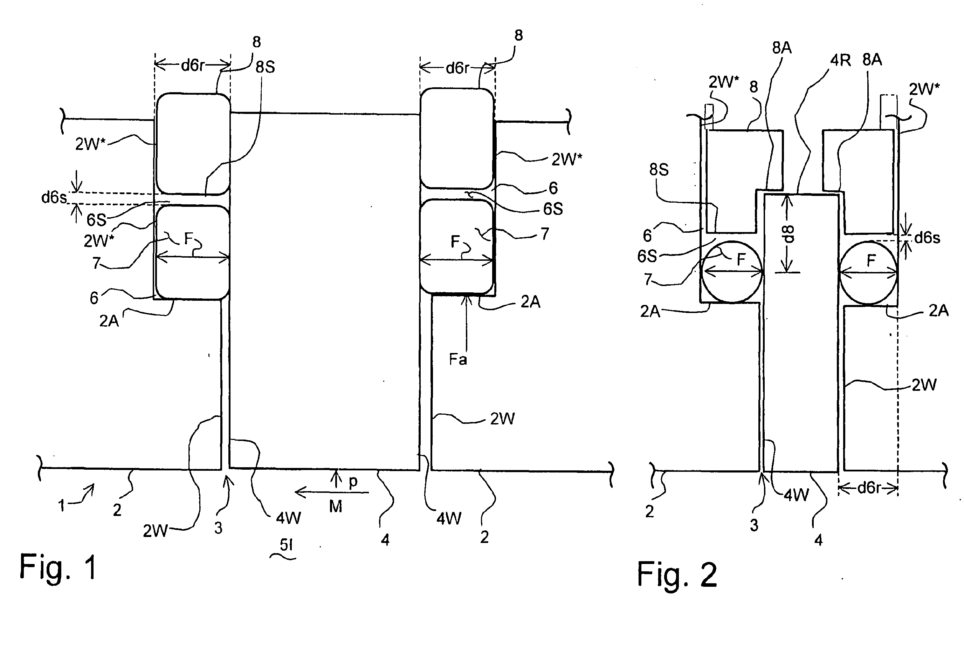

Fig. 1 zeigt stark schematisiert einen vorderseitigen Abschnitt eines Druck-Sensors 1, welcher ein Gehäuse 2 mit einer vorderseitigen Öffnung 3 aufweist, wobei in der vorderseitigen Öffnung 3 eine Sensoreinrichtung 4 eingesetzt ist. Die Vorderseite der Sensoreinrichtung 4 weist eine Membran auf, über welche ein Druck p erfassbar ist, welcher in einem Behältnisinnenraum 5I herrscht, in welchem sich ein Medium M befindet. Das Medium strömt insbesondere längs der Vorderseite des Druck-Sensors 1 entlang. Die vorderseitige Öffnung 3 des Gehäuses 2 wird durch eine Gehäusewandung 2W ausgebildet, welche vorzugsweise einen zylindrischen Umfang aufweist. Die Sensoreinrichtung 4 weist eine seitliche Sensoreinrichtungswandung 4W auf, welche einen Außenumfang entsprechend der Kontur der innenseitigen Gehäusewandung 2W aufweist. Idealerweise sind die Dimensionen der Gehäusewandung 2W und der Sensoreinrichtungswandung 4W so abgestimmt, dass zwischen diesen im zusammengesetzten Zustand kein Spalt verbleibt, in welchen Material des Mediums M aus dem Behältnisinnenraum 5I eindringen kann.

In einem von der Vorderseite beabstandeten Abschnitt weist das Gehäuse 2 eine gegenüber dem Außenumfang der Sensoreinrichtung 4 zurücktretende Wandung 2W* auf. Dadurch wird zwischen dem vorderseitigen Ende der zurücktretenden Gehäusewandung 2W* und dem rückseitigen Ende der vorderen Gehäusewandung 2W ein vorderseitiger und nach innen, d. h. in Richtung der vorderseitigen Öffnung 3 gerichteter Vorsprung 2A mit einer rückseitigen Anschlagsfläche ausgebildet. Dieser Vorsprung bzw. die Anschlagsfläche 2A bilden einen Dichtungsbegrenzungs-Vorsprung 2A aus.

Rückseitig des Dichtungsbegrenzungs-Vorsprungs 2A und zwischen der zurücktretenden Gehäusewandung 2W* sowie der Sensoreinrichtungswandung 4W ist ein Dichtungsaufnahmeraum 6 als Aufnahmeraum für eine Dichtung ausgebildet, in dem eine Dichtung 7 eingesetzt ist. Die Dichtung 7 ist vorzugsweise ein O-Ring, welcher um die Sensoreinrichtung 4 herum durch den vorzugsweise zylindrischen Dichtungsaufnahmeraum 6 verläuft. In für sich bekannter Art und Weise dient die Dichtung 7 dabei insbesondere zum Abdichten des Übergangs zwischen der Gehäusewandung 2W, 2W* und der Sensoreinrichtungswandung 4W.
Zum Festlegen, insbesondere zeitweiligen Befestigen der Sensoreinrichtung 4 in der vorderseitigen Öffnung 3 des Gehäuses 2 werden bei der Montage des Sensors die Dimensionen der Dichtung 7 und des Dichtungsaufnahmeraums 6 aufeinander abgestimmt ausgewählt. Gemäß der bevorzugtesten Ausführungsform ist dabei eine seitliche bzw. bei zylindrischem Aufbau radiale Erstreckung d6r des Dichtungsaufnahmeraums 6 geringer als die entsprechende Erstreckung der entspannten Dichtung 7. Im Fall eines O-Rings als der Dichtung 7 ist darunter der Durchmesser von dessen Querschnitt durch einen Abschnitt des Gummi- bzw. Dichtungsvollkörpers zu verstehen. Durch das Einsetzen der Dichtung 7 in den schmaleren Dichtungsaufnahmeraum 6 wird die Dichtung zusammengedrückt, was in dem üblicherweise elastischen Material der Dichtung 7 eine entgegengerichtete Kraft F erzeugt.

Diese Kraft F wirkt gegen die benachbarten Wandungen, drückt also die Gehäusewandung, insbesondere die zurücktretende Gehäusewandung 2W* und die Sensoreinrichtungswandung 4W auseinander. Dadurch, dass die Sensoreinrichtung 4 sich innerhalb der Gehäusewandung 2W* befindet, ist die Strecke für eine Ausweichbewegung begrenzt. Im Fall einer mehrseitig um die Sensoreinrichtung 4 derart eingespannten Dichtung 7, d.h. insbesondere im Fall einer zylindrischen Anordnung mit einem O-Ring als Dichtung 7 besteht letztendlich gar kein Raum für eine solche Ausweichbewegung. Die eingespannte Dichtung 7 verspannt somit durch die Kraft F die Sensoreinrichtung 4 in dem Gehäuse 1. Die Sensoreinrichtungs-Befestigungseinrichtung 8 wird somit durch die Dichtung 7 in Zusammenwirkung mit dem Dichtungsaufnahmeraum 6 bzw. dessen Wandungen 2W, 4W* ausgebildet.

Zum Festlegen, insbesondere zeitweiligen Befestigen der Sensoreinrichtung 4 in der vorderseitigen Öffnung 3 des Gehäuses 2 dient alternativ oder bevorzugt unterstützend eine Verstelleinrichtung 8 der Sensoreinrichtungs-Befestigungseinrichtung.

Die Verstelleinrichtung 8 weist einen vorder- bzw. stirnseitigen Abschnitt auf, welcher als Aufnahmeraum-Begrenzungsabschnitt 8S oder ggfs. als Spannabschnitt 8S dient. Gemäß der bevorzugten Ausführungsform verbleibt zwischen dem rückseitigen Ende der Dichtung 7 und dem Aufnahmeraum-Begrenzungsabschnitt 8S ein freier Raum in Form eines Spaltes 6S mit einer freien Erstreckung d6s in rückseitiger Richtung.

Zum Festlegen der Sensoreinrichtung 4 in der vorderseitigen Öffnung 3 des Gehäuses 2 wird die Verstelleinrichtung 8 in vorderseitiger Richtung gespannt.

Gemäß der alternativen Ausführungsform kann dabei die Verstelleinrichtung mit ihrem Spannabschnitt 8S gegen die Dichtung 7 gespannt werden. Dadurch, dass die Dichtung 7 durch den Dichtungsbegrenzung-Vorsprung 2A in dieser Richtung begrenzt ist und nicht ausweichen kann, wirkt auf die derart eingespannte Dichtung 7 eine Druckkraft in achsialer Richtung. Diese Druckkraft in achsialer Richtung quetscht die Dichtung 7 zusammen, wodurch aufgrund der elastischen Eigenschaft der Dichtung 7 eine Verformung der Dichtung 7 eintritt. Um der Druckkraft in achsialer Richtung auszuweichen, verformt sich die Dichtung 7 in radialer bzw. seitlicher Richtung. In dieser seitlichen Richtung ist die Dichtung 7 jedoch durch die zurücktretende Gehäusewandung 2W* einerseits und andererseits durch die Sensoreinrichtungswandung 4W begrenzt. Entsprechend übt die Dichtung 7 in seitlicher Richtung eine verspannende Kraft F auf die Gehäusewandung, insbesondere die zurücktretende Gehäusewandung 2W* und die Sensoreinrichtungswandung 4W aus.

Gemäß einer alternativen Ausführungsform kann anstelle des Dichtungsbegrenzungs-Vorsprungs 2A, welcher von der Gehäusewandung 2W* aus in die vorderseitige Öffnung 3 vorspringt auch ein entsprechender Dichtungsbegrenzungs-Vorsprung von der vorderseitigen Seitenwandung 4W der Sensoreinrichtung 4 in Richtung der weitergeöffneten Gehäusewandung 2W* vorspringen. Möglich ist auch die Anordnung einer Sensoreinrichtung 4 mit einem in achsialer Richtung glatten Verlauf der Außenwandung bzw. Außenwandungen und einem entsprechend dazu beabstandeten Verlauf der Gehäusewandung bzw. Gehäusewandungen. In diesem Fall würde im vorderseitigen Bereich ein seperater Dichtungsbegrenzungs-Vorsprung an wahlweise der Gehäusewandung oder der Sensoreinrichtungswandung angesetzt. Sofern der Dichtungsbegrenzungsvorsprung am vorderseitigen Außenumfang der Sensoreinrichtung angeordnet ist, erfolgt der Zusammenbau bzw. das Verspannen.der Verstelleinrichtung 8 gegen die Dichtung 7 vorzugsweise während die Sensoreinrichtung 4 mittels beispielsweise einer separaten und zeitweilig angelegten Spanneinrichtung relativ zum Gehäuse 2 festgelegt ist, damit durch die sich achsial vorwärtsbewegende Verstelleinrichtung 8 nicht mittels der Dichtung 7 die gesamte Sensoreinrichtung 4 über den davon vorspringenden Dichtungsbegrenzungs-Vorsprung aus der vorderseitigen Öffnung 3 des Gehäuses 2 vorderseitig herausgedrückt wird.

Fig. 2 zeigt eine modifizierte Anordnung, wobei nachfolgend zur Vermeidung von Wiederholungen im wesentlichen nur Bauelemente und funktionale Aspekte beschrieben werden, welche gegenüber der Ausführungsform gemäß Fig. 1 verschieden sind.

Wiederum ist in einer vorderseitigen Öffnung 3 eines Gehäuses 2 eine Sensoreinrichtung 4 mit Hilfe einer Dichtung 7 befestigt. Die Dichtung 7 ist wiederum zwischen einem vorderseitigen Dichtungsbegrenzungs-Vorsprung 2A des Gehäuses 2 und den Wandungen 2W, 4W des Dichtungsaufnahmeraums 6 eingespannt. Die Dichtung 7 verformt sich, da deren Durchmesser breiter als die seitliche Erstreckung d6r des Dichtungsaufnahmeraums 6 ist und übt eine Kraft F in seitlicher Richtung aus, so dass das Gehäuse 2 und die Sensoreinrichtung 4 über die Gehäusewandung 2W*, die Dichtung 7 und die Sensoreinrichtungswandung 4W gegeneinander verspannt werden.

Die Verstelleinrichtung 8 weist vorteilhafterweise einen nach innen in den Raum der vorderseitigen Öffnung 3 gerichteten Vorsprung 8A auf, welcher einen vorderseitigen und innenseitigen Anschlag 8A ausbildet. Dieser innenseitige Anschlag 8A der Verstelleinrichtung 8 dient als Anschlag für einen rückseitigen Abschnitt 4R der Sensoreinrichtung 4. Durch die Entfernung der vorderseitigen Anschlagsfläche des innenseitigen Anschlags 8A des Vorsprungs der Verstelleinrichtung 8 einerseits und andererseits den stirnseitigen Abschnitt der Verstelleinrichtung 8 zum Ausbilden des Aufnahmeraum-Begrenzungsabschnitts 8S gebildeten Abstand d8 wird die Vorschubstrecke der Sensoreinrichtungs-Befestigungseinrichtung 8 gegen die Dichtung 7 relativ zum rückseitigen Anschlag 4R der Sensoreinrichtung 4 begrenzt. Dadurch wird zugleich der verbleibende Spalt 6S oder gemäß alternativer Ausführungsform die wirkende Spannkraft auf die Dichtung 7 begrenzt, so dass ein unbeabsichtigtes Zerquetschen und Beschädigung der Dichtung 7 durch eine zu hohe auf die Dichtung 7 wirkende achsiale Kraft vermieden wird.

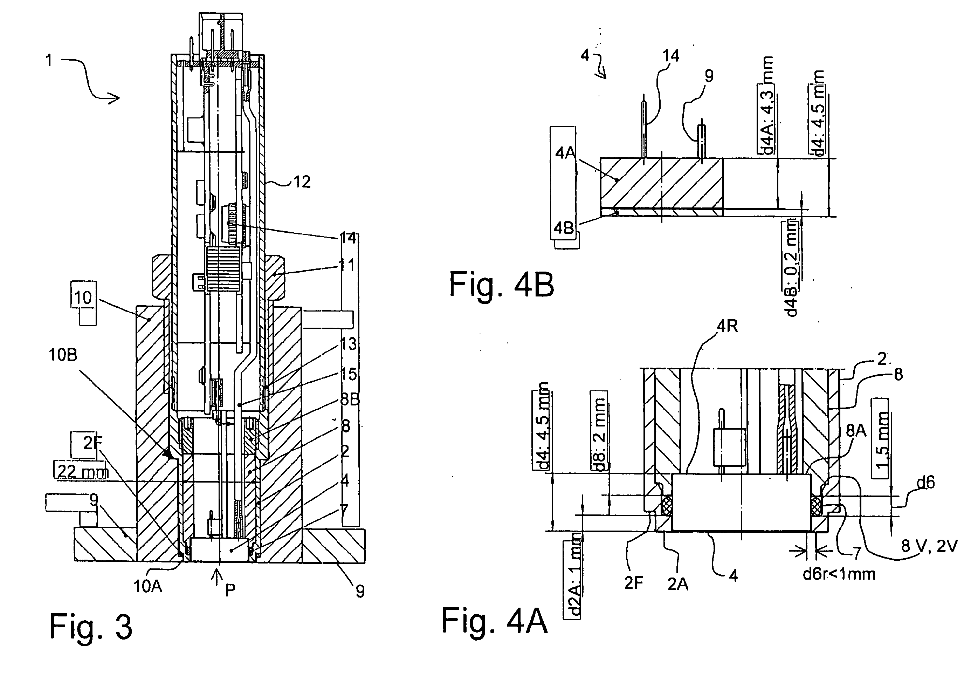

Fig. 3 zeigt eine weitere Variante eines Druck-Sensors mit dem im wesentlichen gleichen Wirkungsprinzip wie bei den beschriebenen Ausführungsformen.

Dargestellt ist wiederum ein Druck-Sensor 1, welcher in die Wandung eines Behältnisses 9 eingesetzt ist. Die Vorderseite des Druck-Sensors mit der Sensoreinrichtung 4 ragt dabei bis zum Innenraum des Behältnisses 9, wobei die Vorderseite des Druck-Sensors bzw. dessen Gehäuse 2 und der Sensoreinrichtung 4 bevorzugt frontbündig mit der Innenwandung des Behältnisses 9 abschließt. Auf die Sensoreinrichtung 4 wirkt somit ein Druck p, welcher im Innenraum des Behältnisses 9 herrscht. Das Gehäuse 2 ist zur Befestigung am Behältnis 9 beim dargestellten Ausführungsbeispiel in einer Einschweißbefestigung bzw. einer Einschweißmuffe 10 eingesetzt, welcher in der Wandung des Behältnisses 9 eingesetzt ist. Bekannt sind z. B. auch Einschraubmuffen. Die Arretierung des Gehäuses 2 in der Einschweißmuffe 10 erfolgt über eine Schraube 11, welche eine hinteren Gehäuseabschnitt umgreift und stirnseitig das Gehäuse 2 in die Einschweißmuffe 10 drückt. Die Befestigungsschraube 11 weist ein Außengewinde auf, welches mit einem entsprechenden Innengewinde der Einschweißmuffe 10 in Eingriff tritt. Bevorzugt sind die Vorderseite der Befestigungsschraube 11 und die Rückseite des Gehäuses 2 durch einen zwischengelegten Ring 13, insbesondere Dichtungsring oder sonstigen Ring aus elastischem Material voneinander beabstandet. Vorderseitig weist die Einschweißmuffe 10 einen nach innen gerichteten Vorsprung 10b auf, welcher einen Anschlag für eine umfangsseitige Fügung 2F in dem äußeren vorderseitigen Gehäuse 2 aufweist. Durch den Anschlag 10b wird das Vorschieben des Gehäuses 2 in den Innenraum des Behältnisses 9 vermieden. Zwischen der Fügung 2F und diesem Anschlag 10A ist zur Pufferung und Abdichtung zweckmäßigerweise eine Dichtung, insbesondere in Form eines O-Rings eingesetzt.

Die Sensoreinrichtung 4 ist innerhalb des Gehäuses 2 wiederum mittels einer Dichtung 7 festgelegt, welche wiederum in einem Dichtungsaufnahmeraum 6 eingespannt ist. Eine Verstelleinrichtung 8 einer Sensoreinrichtungs-Befestigungseinrichtung ist durch eine rückseitig zu dieser angeordnete Schraube mit umfangsseitigem Gewinde in Richtung der Dichtung 7 vorgespannt und innerhalb des Gehäuses 2 arretiert. Diese Schraube 8B greift mit ihrem umfangsseitigen Gewinde in ein entsprechendes Innengewinde im rückseitigen Gehäuse 2 ein.

Rückseitig der Schraube 8B als abschließendem Teil der Verstelleinrichtung 8 ist vorzugsweise der hintere Gehäuseabschnitt 12 angeordnet, welcher Komponenten zum Steuern und Betreiben der Sensoreinrichtung 4 aufweist. Zu diesen Komponenten gehört insbesondere eine Auswerteelektronik 14, welche über elektrische Verbindungen mit der Sensoreinrichtung 4 kontaktiert ist, sowie eine Druckausgleichseinrichtung 15, sofern die Sensoreinrichtung 4 einen Aufbau aufweist, bei welchem ein Druckausgleich erforderlich ist.

Der dargestellte Druck-Sensor 1 sowie die Komponenten von diesem und weitere Befestigungselemente wie der Einschweißflansch 11 weisen vorzugsweise einen zylindrischen Aufbau auf. Einsetzbar sind jedoch prinzipiell auch Einzelkomponenten oder alle Komponenten in anderer Form, beispielsweise mit einem quadratischen oder mehreckigen Querschnitt. Auch können statt der umlaufenden Dichtung 7 einzelne, gegebenenfalls sogar zueinander beabstandete Dichtungselemente eingesetzt sein.

Fig. 4A stellt wiederum unter Bezug auf vorstehend beschriebene Ausführungsformen eine weitere Ausführungsform dar. Wiederum sitzt eine Sensoreinrichtung 4 vorderseitig in einem Gehäuse 2, wobei die Sensoreinrichtung 4 in dem Gehäuse 2 in bereits beschriebener Art und Weise mittels einer umfangseitigen Dichtung 7 in einem Dichtungsaufnahemeraum 6 mit geringerer seitlicher Erstreckung d6reingespannt ist. Eine dargestellte Verstelleinrichtung weist wiederum eine innenseitige Fügung zum Ausbilden eines innenseitigen Anschlags 8A auf, welcher mit dem Umfangsbereich der Rückseite 4R der Sensoreinrichtung in Eingriff tritt, so dass die Verstelleinrichtung 8 relativ zu der Sensoreinrichtung 4 nur begrenzt weit in Richtung der Dichtung 7 vorgespannt werden kann. Zusätzlich weist die Außenumfangsseite der Verstelleinrichtung 8 vorderseitig eine Fügung 8V auf, welche einen vorderseitigen Anschlag ausbildet, welcher mit einem innenseitigen Vorsprung 2V des Gehäuses 2 als einem Gegenanschlag in Eingriff tritt. Dadurch kann die Verstelleinrichtung 8 auch relativ innerhalb des Gehäuses 2 und relativ zu diesem nur begrenzt weit in vorderseitiger Richtung vorgeschoben werden. Auch dies dient einerseits zur Begrenzung des freien Spalts 6S rückseitig der Dichtung 7 und andererseits zu Begrenzung der Vorschubstrecke der Verstelleinrichtung 8 und darüber der Sensoreinrichtung 4 in Richtung der Vorderseite des Druck-Sensors bzw. der Vorderseite des Gehäuses 2. Diese Anordnung kann je nach Ausführungsform optional auch entfallen.

Außerdem dargestellt ist die Fügung 2F im vorderseitigen Außenumfang des Gehäuses. Hier sitzt eine weitere Dichtung.
Fig. 4B stellt vergrößert eine Sensoreinrichtung 4 dar, welche vorzugsweise aus einem rückseitigen Sensoreinrichtungs-Grundkörper 4A und einer vorderseitigen Drucksensoreinrichtungs-Membran 4B besteht. Rückseitig sind wiederum Anschlüsse für eine elektrische Verbindung zur Auswerteelektronik und eine Druckausgleichsverbindung für die Druckausgleichseinrichtung an der Sensoreinrichtung 4 angeschlossen.

Ohne Beschränkung auf die umsetzbaren Ausführungsformen sind in den Fig., insbesondere Fig. 3, 4A und 4B Bemaßungen einer besonders bevorzugten Ausführungsform angegeben. So beträgt der Abstand d8 zwischen dem vorderseitigen Spannabschnitt und dem innenseitigen Anschlag 4R der Verstelleinrichtung 8 vorzugsweise 2 mm oder mehr. Die Höhe d6 des Dichtungsaufnahmeraums 6, d. h. dessen achsiale Erstreckung beträgt beim zusammengesetzten Drucksensor vorzugsweise 1,5 mm oder mehr. Die darin eingesetzte Dichtung 7 besteht vorzugsweise aus einem O-Ring mit einem Durchmesser von größer oder gleich 1 mm. Die Breite d6r bzw. radiale Erstreckung des Dichtungsaufnahmeraums 6 beträgt vorzugsweise weniger als die Breite der Dichtung 7, vorliegend somit weniger oder mehr 1 mm. Bei einer achsialen Erstreckung bzw. Höhe d4 der Sensoreinrichtung 4 von 4,5 mm und einer achsialen Erstreckung d2A des Dichtungsbegrenzungs-Vorsprungs 2A von 1 mm ist die Sensoreinrichtung 4 bei diesem besonders bevorzugten Ausführungsbeispiel frontbündig in dem Gehäuse 2 eingespannt. Die Sensoreinrichtung 4 selber würde bei einer achsialen Erstreckung d4 von 4,5 mm durch einen Sensoreinrichtungs-Grundkörper mit einer achsialen Erstreckung d4A von 4,3 mm und einer Membrane 4B mit einer Dicke von d4B 0,2 mm ausgebildet werden können. Während alternative Ausführungsformen vorzugsweise größere Erstreckungen aufweisen, sind prinzipiell auch Ausführungen umsetzbar, bei denen eine weitere Verkleinerung der genannten Maße umsetzbar ist.

Durch die dargestellten Ausführungsformen ist insbesondere der Einsatz eines keramisch kapazitiven Drucksensorelements 4 für einen Druck-Sensor mit einem Außenumfang von vorzugsweise 17,5 mm in Verbindung mit einer Druckmesseinrichtung mit frontbündiger Sensoreinrichtung 4 und einem Befestigungsdurchmesser des Druck-Sensors bzw. dessen Außenumfangs ab 22 mm aufbaubar, soweit der Grundkörper eine ausreichende Bauhöhe hat. Entsprechend wird für einen frontbündigen Einbau der Sensoreinrichtung 4 in die Sensoreinrichtungs-Befestigungseinrichtung eine ausreichend tiefe Fügung mit bei diesem Beispiel 2 mm oder mehr eingebracht. Ein entsprechender Dichtungsaufnahmeraum 6 für die Dichtung 7, welche ein Dicke von 1 mm oder mehr bei bevorzugtem Ausführungsbeispiel aufweist, wird vorzugsweise mit einer Höhe d6 von 1,5 mm radial um die Sensoreinrichtung 4 herum in dem Gehäuse 2 ausgebildet. Außerdem weist die bevorzugte Ausführungsform einen vorderseitigen und innenseitig gerichteten Dichtungsbegrenzungs-Vorsprung 2A mit einer achsialen Erstreckung d2A von 1 mm auf, so dass als Bauhöhe bzw. achsiale Erstreckung d4 der Sensoreinrichtung 4 mit dem Sensoreinrichtungsgrundkörper 4A 4,5 mm oder mehr gewählt werden kann.

## Patentansprüche

1. Druck-Sensor (1) mit
- einem Gehäuse (2),
- einer Sensoreinrichtung (4),
- einer Sensoreinrichtungs-Befestigungseinrichtung zum Befestigen der Sensoreinrichtung (4) an und/oder im vorderseitigen Bereich des Gehäuses (2) und
- einer Dichtung (7) zum Abdichten des Übergangs zwischen dem Gehäuse (2) und der Sensoreinrichtung (4), wobei
- das Gehäuse (2) eine innenseitige Gehäusewandung (2W) aufweist und die Sensoreinrichtung (4) eine außenseitige Sensoreinrichtungswandung (4B) aufweist, wobei die Gehäusewandung (2W) und die Sensoreinrichtungswandung (4W) zueinander benachbart verlaufen und zwischen der Gehäusewandung (2W) und der Sensoreinrichtungswandung (4W) einen Aufnahmeraum (6) zum Aufnehmen der Dichtung (7) aufweisen, wobei
- eine Erstreckung (d6r) des Aufnahmeraums (6) für die Dichtung (7) in seitlicher Richtung zwischen Gehäusewandung (2W*) und Sensoreinrichtungswandung (4W) kleiner der entsprechenden Erstreckung der nicht eingespannten Dichtung (7) ist, und wobei das Gehäuse (2) und die Sensoreinrichtung (4) frontbündig angeordnet sind,
**dadurch gekennzeichnet, dass**
als Anschlag für die Dichtung (7) in vorderseitiger Reichtung das Gehäuse (2) einen vorderseitigen nach innen gerichteten Dichtungsbegrenzungs-Vorsprung (2A) zur Sensoreinrichtungswandung (4W) hin aufweist und/oder die Sensoreinrichtung (4) einen vorderseitigen Dichtungsbegrenzungs-vorsprung zur Gehäusewandung hin aufweist, wobei die Sensoreinrichtungs-Befestigungseinrichtung eine Verstelleinrichtung (8, 8B) mit einem Aufnahmeraum-Begrenzungsabschnitt (8S) aufweist, der zumindest teilweise zwischen der Gehäusewandung (2W*) und der Sensoreinrichtungswandung (4W) in Richtung der Dichtung (7) verstellbar angeordnet ist und wobei die Verstelleinrichtung (8) einen mit dem Gehäuse (2) gekoppelten innenseitigen Anschlag (8A) zum Anlegen an einen rückseitigen Abschnitt (4R) der Sensoreinrichtung (4) aufweist, um eine Einschubtiefe der Sensoreinrichtung (4) in das Gehäuse (2) zu begrenzen.

2. Druck-Sensor nach einem vorstehenden Anspruch, bei dem in rückseitiger Richtung der Dichtung (7), die zwischen der Gehäusewandung (2W, 2W*) und der Sensoreinrichtungswandung (4W) eingespannt ist, ein freier Raum (6S) zu rückseitig benachbarten Gehäusekomponenten verbleibt.

3. Druck-Sensor nach Anspruch 1 oder 2, bei dem die Verstelleinrichtung (8, 8B) ein Außengewinde zum Einschrauben in ein Innengewinde des Gehäuses (2), insbesondere der Gehäusewandung (2W) aufweist, wobei das Außengewinde und das Innengewinde so ineinander eingreifen, dass der Aufnahmeraum-Begrenzungsabschnitt (8S) der Verstelleinrichtung (8) in Richtung der Dichtung (7) verstellbar ist, insbesondere als ein Spannabschnitt (8S) gegen die Dichtung (7) spannbar ist.

4. Druck-Sensor nach einem der Ansprüche 1 oder 2, bei dem die Verstelleinrichtung (8) einen außenseitigen Anschlag (8V) zum Anlegen an einen innenseitigen Befestigungseinrichtungs-Begrenzungsvorsprung (2V) des Gehäuses (2) aufweist, um den Vorschub der Verstelleinrichtung (8) in vorderseitiger Richtung zu begrenzen.

5. Druck-Sensor nach einem vorstehenden Anspruch, bei dem die Sensoreinrichtung (4) ein keramisch kapazitives Drucksensorelement mit einem Außendurchmesser kleiner oder gleich 18 mm aufweist.

6. Druck-Sensor nach einem vorstehenden Anspruch, bei dem das Gehäuse (2) einen Außendurchmesser von 20 - 25 mm, insbesondere 22 mm aufweist.

7. Druck-Sensor nach einem vorstehenden Anspruch, bei dem
- der Aufnahmeraum (6) für die Dichtung (7) in achsialer Richtung höher, insbesondere 1,5-fach höher als die achsiale Erstreckung der Dichtung (7) ausgebildet ist,
- ein innenseitiger Anschlag (8A) der Sensoreinrichtungs-Befestigungseinrichtung (8) gegenüber einem vorderseitigen Spannabschnitt (8S) zum Spannen der Dichtung (7) in achsialer Richtung um eine Erstreckung (d8) größer der entsprechenden Dimension der Dichtung (7), insbesondere größer 2 mm oder mehr, beabstandet sind und
- eine achsiale Erstreckung (d8) vom innenseitigen Anschlag (8A) zum vorderseitigen Spannabschnitt (8S) der Sensoreinrichtungs-Befestigungseinrichtung (8) plus der achsialen Erstreckung (d6) des Dichtungsaufnahmeraums (6) für die Dichtung (7) plus eine Erstreckung (d2A) eines Dichtungsbegrenzungs-Vorsprungs (2A) zusammengesetzt gleich der achsialen Erstreckung (d4) der Sensoreinrichtung (4) ist.

## Claims

1. Pressure sensor (1) having
- a housing (2),
- a sensor device (4),
- a sensor device mounting device for mounting the sensor device (4) on and/or in the front region of the housing (2), and
- a seal (7) for sealing the transition between the housing (2) and the sensor device (4), wherein
- the housing (2) has an inner housing wall (2W) and the sensor device (4) has an outer sensor device wall (4W), wherein the housing wall (2W) and the sensor device wall (4W) run adjacent to one another and have between the housing wall (2W) and the sensor device wall (4W) a receiving space (6) for receiving the seal (7), wherein
- a dimension (d6r) of the receiving space (6) for the seal (7) in the lateral direction between the housing wall (2W*) and the sensor device wall (4W) is smaller than the corresponding dimension of the non-compressed seal (7), and wherein the housing (2) and the sensor device (4) are arranged flush with one another at the front,
**characterised in that**, as a stop for the seal (7) in the front direction, the housing (2) has a front, inwardly directed seal limiting protrusion (2A) towards the sensor device wall (4W) and/or the sensor device (4) has a front seal limiting protrusion towards the housing wall, wherein the sensor device mounting device comprises a movable device (8, 8B) with a receiving space limiting section (8S) which is arranged such as to be able to move at least partially between the housing wall (2W*) and the sensor device wall (4W) in the direction of the seal (7), and wherein the movable device (8) has an inner stop (8A) coupled to the housing (2) for bearing against a rear section (4R) of the sensor device (4) in order to limit the depth to which the sensor device (4) can be pushed into the housing (2).

2. Pressure sensor according to a preceding claim, in which, in the rear direction of the seal (7), which is clamped between the housing wall (2W, 2W*) and the sensor device wall (4W), a free space (6S) remains towards adjacent housing components at the rear.

3. Pressure sensor according to claim 1 or 2, in which the movable device (8, 8B) has an outer thread for screwing into an inner thread of the housing (2), in particular of the housing wall (2W), wherein the outer thread and the inner thread engage in one another in such a way that the receiving space limiting section (8S) of the movable device (8) can move in the direction of the seal (7), in particular can be clamped against the seal (7) as a clamping section (8S).

4. Pressure sensor according to one of claims 1 or 2, in which the movable device (8) has an outer stop (8V) for bearing against an inner mounting device limiting protrusion (2V) of the housing (2), in order to limit the advance of the movable device (8) towards the front.

5. Pressure sensor according to a preceding claim, in which the sensor device (4) has a ceramic capacitive pressure sensor element with an outer diameter of less than or equal to 18 mm.

6. Pressure sensor according to a preceding claim, in which the housing (2) has an outer diameter of 20-25 mm, in particular 22 mm.

7. Pressure sensor according to a preceding claim, in which
- the receiving space (6) for the seal (7) is higher, in particular 1.5 times higher, in the axial direction than the axial dimension of the seal (7),
- an inner stop (8A) of the sensor device mounting device (8) is arranged at a distance (d8) in the axial direction from a front clamping section (8S) for clamping the seal (7) which is greater than the corresponding dimension of the seal (7), in particular greater than 2 mm or more, and
- an axial dimension (d8) from the inner stop (8A) to the front clamping section (8S) of the sensor device mounting device (8), plus the axial dimension (d6) of the seal receiving space (6) for the seal (7), plus a dimension (d2A) of a seal limiting protrusion (2A) taken together are equal to the axial dimension (d4) of the sensor device (4).

## Revendications

1. Capteur de pression (1) comprenant :
- un boîtier (2),
- une installation de capteur (4),
- une installation de fixation de l'installation de capteur pour fixer l'installation de capteur (4) a et/ou dans la zone avant du boîtier (2) et
- un joint (7) pour étanchéifier le passage entre le boîtier (2) et l'installation de capteur (4), dans lequel
- le boîtier (2) présente une paroi de boîtier (2W)côté intérieur et l'installation de capteur (4) une paroi de l'installation de capteur côté intérieur (4B), la paroi de boîtier (2W) et la paroi de l'installation de capteur (4W) s'étendant à proximité l'une de l'autre et présentent entre la paroi de boîtier (2W) et la paroi de l'installation de capteur (4W), un logement (6) pour recevoir le joint (7), dans lequel
- une distance (d6r) du logement (6) pour le joint (7) dans la direction latérale entre la paroi de boîtier (2W*) et la paroi de l'installation de capteur (4W) est plus petite que la distance correspondante du joint (7) non installé, le boîtier (2) et l'installation de capteur (4) ayant leurs faces alignées,
**caractérisé en ce que**
pour servir de butée pour le joint (7), le boîtier (2) comporte dans la direction de sa face avant, une saillie de limitation du joint (2A) du côté avant, dirigé vers l'intérieur vers la paroi de l'installation de capteur (4W) et/ou l'installation de capteur (4) présente du côté avant une saillie de limitation du joint vers la paroi du boîtier, l'installation de fixation de l'installation de capteur présentant une installation de réglage (8, 8B) avec un segment de limitation du logement (8S) qui est disposé au moins partiellement réglable entre la paroi de boîtier (2W*) et la paroi de l'installation de capteur (4W) dans la direction du joint (7), et
dans lequel l'installation de réglage (8) présente une butée (8A) couplée du côté intérieur avec le boîtier (2) pour s'appuyer à un segment arrière (4R) de l'installation de capteur (4) et limiter la profondeur d'enfoncement de l'installation de capteur (4) dans le boîtier (2).

2. Capteur de pression selon la revendication précédente,
dans lequel en direction arrière du joint (7), celui-ci étant enfoncé entre les parois de boîtier (2W, 2W*) et la paroi de l'installation de capteur (4W), il subsiste un espace libre (6S) par rapport au composant de boîtier voisin du côté arrière.

3. Capteur de pression selon la revendication 1 ou 2,
dans lequel l'installation de réglage (8, 8B) présente un filetage extérieur pour le vissage dans le filetage intérieur du boîtier (2), en particulier dans la paroi de boîtier (2W),
le filetage extérieur et le filetage intérieur venant en prise l'un dans l'autre de sorte que le segment de limitation du logement (8S) les installations de réglage (8) soient réglables dans la direction du joint (7), en particulier comme segment de mise en tension (8S) serré contre le joint (7).

4. Capteur de pression selon la revendication 1 ou 2,
dans lequel l'installation de réglage (8) présente une butée (8V) du côté extérieur pour s'appuyer sur une saillie de limitation de l'installation de fixation (2V) du côté intérieur du boîtier (2), pour limiter la course vers l'avant de l'installation de réglage (8) dans la direction vers l'avant.

5. Capteur de pression selon l'une des revendications précédentes,
dans lequel l'installation de capteur (4) est un élément de capteur de pression capacitif en céramique avec un diamètre extérieur inférieur ou égal à 18 mm.

6. Capteur de pression selon l'une des revendications précédentes,
dans lequel le boîtier (2) a un diamètre extérieur de 20-25 mm en particulier 22 mm.

7. Capteur de pression selon l'une des revendications précédentes,
dans lequel le logement (6) du joint (7) est, dans la direction axiale, plus haut, en particulier 1 à 5 fois plus haut que la distance axiale du joint (7),
- une butée (8A) du côté intérieur de l'installation de fixation (8) de l'installation de capteur est écarté par rapport à un segment de serrage (8S) du côté avant, pour serrer le joint (7) dans la direction axiale est espacée dans la direction axiale d'une distance (d8) supérieure à la dimension correspondant du joint (7), en particulier plus grande de 2 mm ou plus.
- la distance axiale (d8) de la butée (8A) intérieure par rapport au segment de serrage (8S) du côté avant de l'installation de fixation de l'installation de capteur (8) augmenté de la distance axiale (d6) du logement du joint (6) pour le joint (7) augmenté d'une distance (d2A) de la limitation de joint (2A) mises ensemble est égale à la distance axiale (d4) de l'installation de capteur (4)
